Europäisches Patentamt

European Patent Office

Office européen des brevets

(19)

(11) Veröffentlichungsnummer : **0 076 913**
**B1**

(12) # EUROPÄISCHE PATENTSCHRIFT

(45) Veröffentlichungstag der Patentschrift :
**19.10.88**

(21) Anmeldenummer : **82107743.5**

(22) Anmeldetag : **24.08.82**

(51) Int. Cl.⁴ : **C 01 B 31/10**

(54) Verfahren und Vorrichtung zur Aktivierung von kohlenstoffhaltigem Material.

(30) Priorität : **08.10.81 DE 3139923**

(43) Veröffentlichungstag der Anmeldung :
**20.04.83 Patentblatt 83/16**

(45) Bekanntmachung des Hinweises auf die Patenterteilung : **19.10.88 Patentblatt 88/42**

(84) Benannte Vertragsstaaten :
**BE DE FR GB IT NL**

(56) Entgegenhaltungen :
**DE-C- 871 145**
**US-A- 2 359 910**

(73) Patentinhaber : **Degussa Aktiengesellschaft**
**Weissfrauenstrasse 9**
**D-6000 Frankfurt am Main 1 (DE)**

(72) Erfinder : **Schreyer, Gerd, Dr.**
**Wildaustrasse 22**
**D-6450 Hanau 9 (DE)**
Erfinder : **Löwe, Fritz**
**Korbacher Strasse 24**
**D-5790 Brilon-Wald (DE)**

## Beschreibung

Bei der Gasaktivierung wird kohlenstoffhaltiges Material bei erhöhter Temperatur mit Aktivierungsgasen behandelt. Am häufigsten werden Wasserdampf, Kohlendioxid und deren Mischungen verwendet. Dabei wirken Wasserdampf und Kohlendioxid bei einer Reaktionstemperatur von 800 bis 1 000 °C als milde Oxidationsmittel. Wegen des endothermen Charakters der Aktivierungsreaktion müssen die zu aktivierenden Kohleteilchen in innige Berührung mit dem Aktivierungsgas gebracht werden. Dies geschieht u. a. in direkt beheizten Drehrohröfen (vgl. Ullmann's Enzyklopädie der technischen Chemie, Band 14, Seite 623, 4. Auflage 1977).

Das bekannte Verfahren hat jedoch den Nachteil, daß es, weil die Aktivierungsabgase bei der Aktivierungsreaktion nicht weiterverwendet werden, sehr energieaufwendig ist.

Gegenstand der Erfindung ist ein Verfahren zur Aktivierung von kohlenstoffhaltigem Material mittels eines Drehrohres, welches dadurch gekennzeichnet ist, daß man die Aktivierungsabgase an den Ort des Eintritts der Aktivierungsgase in dem Drehrohr rückführt, wobei man die rückgeführten Aktivierungsabgase durch die Reaktionswärme innerhalb des Drehrohres vorwärmt. Die Rückführung der Aktivierungsabgase kann vorteilhafterweise derart geschehen, daß man diese an dem Gasaustrittsort des Drehrohres absaugt und mittels einer geeigneten Vorrichtung an den Ort des Eintritts der Aktivierungsgase in das Drehrohr einführt.

Zur Rückführung der Aktivierungsabgase ist an einem Drehrohr mindestens eine geeignete Vorrichtung angeordnet.

Als kohlenstoffhaltiges Material kann man z. B. Holzkohle, Steinkohle, Braunkohlenschwelkoks oder Torfkoks einsetzen.

Das erfindungsgemäße Verfahren und die erfindungsgemäße Vorrichtung weisen den Vorteil auf, daß ein erheblicher Teil an Energie eingespart werden kann. So ist es z. B. möglich, den Kopfbrenner auszuschalten, nachdem die Aktivierungsreaktion in Gang gekommen ist. Durch die Rückführung der Aktivierungsabgase ist es weiterhin möglich, ca. 50 % Wasserdampf weniger einzusetzen. Zusätzlich gestaltet sich die Aktivierungsathmosphäre günstiger, weil weniger Luft und somit weniger schädlicher Stickstoff zugeführt werden.

Die Vorrichtung zur Rückführung der Aktivierungsabgase ist, erfindungsgemäß derart gestaltet, daß an einem Drehrohr parallel zu dessen Längsachse mindestens eine Rohrleitung mit mindestens einem Gebläse angeordnet ist, wobei die Rohrleitung mindestens zum Teil innerhalb des Drehrohres angeordnet ist, während das Gebläse ausserhalb des Drehrohrs auf dem Mantel des Drehrohres angeordnet ist.

Erfindungsgemäß kann die Rohrleitung an dem einen Ende beweglich an der Innenseite des Drehrohrmantels befestigt sein.

Vorteilhafterweise ist die Rohrleitung derart gestaltet, daß sie als Hubleiste innerhalb des Drehrohres verwendet werden kann. Hierbei ist ein quadratischer Querschnitt der Rohrleitung von Vorteil.

Das erfindungsgemäße Verfahren und die Vorrichtung werden anhand der Zeichnung näher erläutert :

Es zeigen

Figur 1 die erfindungsgemäße Vorrichtung zur Rückführung der Aktivierungsabgase an einem Drehrohr im Längsschnitt

Figur 2 den absaugseitigen und den ausblasseitigen Teil der erfindungsgemäßen Vorrichtung im Längsschnitt

Figur 3 einen Querschnitt durch den ausblasseitigen Teil der erfindungsgemäßen Vorrichtung

Figur 4 einen Querschnitt durch den absaugseitigen Teil der erfindungsgemäßen Vorrichtung.

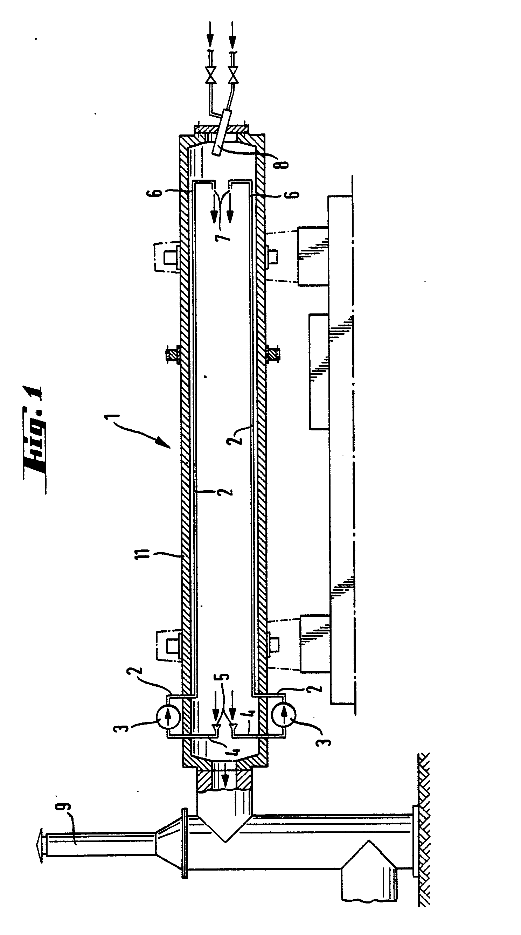

Gemäß Figur 1 ist an dem Drehrohr 1 die Rohrleitung 2 zur Rückführung der Aktivierungsabgase parallel zu der Längsachse des Drehrohres angeordnet. In der Rohrleitung 2 ist das Gebläse 3 außerhalb des Drehrohres 1 angeordnet.

An der Rohrleitung 2 befinden sich an dem Ende 4 die Absaugöffnung 5 und an dem Ende 6 die Ausblasöffnung 7. An dem Drehrohr 1 sind weiterhin der Brenner 8 und der Abgaskamin 9 angeordnet.

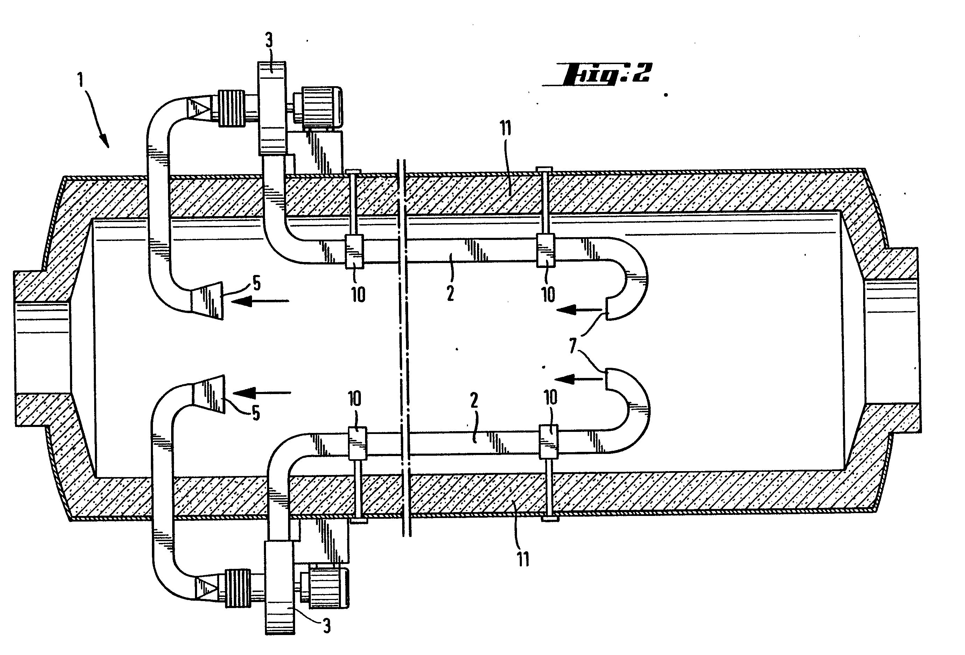

Gemäß Figur 2 ist an dem Drehrohr 1 die Rohrleitungs 2 zur Rückführung der Aktivierungsgase mittels der Halterung 9 an dem Drehrohrmantel 10 angeordnet. Die Absaugöffnungen 5 sind entgegen dem Aktivierungsgasstrom gebogen angeordnet.

Die Gebläse 3 sind ausserhalb des Drehrohres angeordnet.

Die Ausblasöffnungen 7 sind in Richtung des Aktivierungsgasstromes gebogen angeordnet.

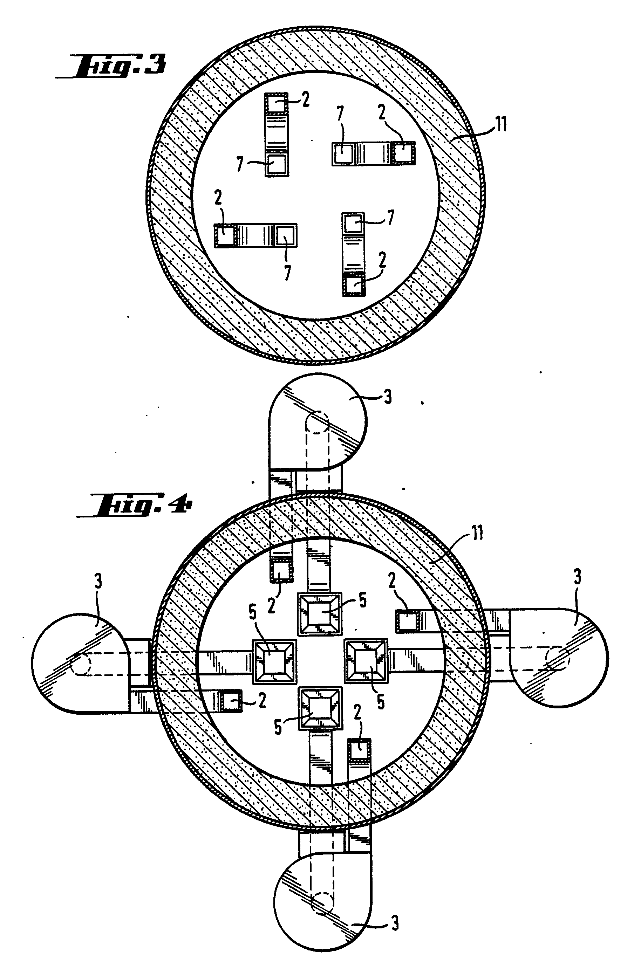

Gemäß Figur 3 sind innerhalb des Drehrohrmantels 10 die Ausblasöffnungen 7 von vier Rohrleitungen 2 angeordnet. Die Rohrleitungen 2 und die Ausblasöffnungen 7 weisen einen quadratischen Querschnitt auf.

Gemäß Figur 4 sind innerhalb des Drehrohrmantels 10 vier Rohrleitungen 2 sowie vier Ansauggöffnungen 5 angeordnet. Beide Vorrichtungen weisen einen quadratischen Querschnitt auf.

Die vier Gebläse 3 sind ausserhalb des Drehrohrmantels auf diesem befestigt.

## Patentansprüche

1. Verfahren zur Aktivierung von kohlenstoffhaltigem Material mittels eines Drehrohres, dadurch gekennzeichnet, daß man die Aktivierungsabgase zum Teil an den Ort des Eintritts der Aktivierungsgase in dem Drehrohr rückführt, wobei man die rückgeführten Aktivierungsabgase durch die Reaktionswärme innerhalb des Drehrohres vorwärmt.

2. Vorrichtung geeignet zur Durchführung des Verfahrens nach dem Anspruch 1, dadurch gekennzeichnet, daß in einem Drehrohr mindestens eine Vorrichtung zur Rückführung der Aktivierungsabgase angeordnet ist, wobei an dem Drehrohr parallel zur Längsachse des Drehrohrs mindestens eine Rohrleitung mit mindestens einem Gebläse angeordnet ist, wobei die Rohrleitung mindestens zum Teil innerhalb des Drehrohres angeordnet ist, während das Gebläse außerhalb des Drehrohres auf dem Mantel des Drehrohres angeordnet ist.

**Claims**

1. A process for the activation of carbon-containing material using a rotating tube furnace, characterized in that the waste activation gases are partly returned to the point of entry of the activation gases in the rotating tube furnace, the waste activation gases returned being preheated by the heat of reaction in the rotating tube furnace.

2. A device suitable for carrying out the process claimed in claim 1, characterized in that at least one device for the return of the waste activation gases is arranged in a rotating tube furnace, at least one pipe with at least one blower being arranged on the rotating tube furnace parallel to the longitudinal axis thereof, the pipe being arranged at least partly within the rotating tube furnace while the blower is arranged outside the rotating tube furnace on the shell thereof.

**Revendications**

1. Procédé pour l'activation de matériau carboné, au moyen d'un tuyau rotatif, caractérisé en ce que l'on recycle en partie dans le tuyau rotatif les gaz d'activation rejetés, au niveau de l'entrée des gaz d'activation, en préchauffant à l'intérieur du tuyau rotatif, au moyen de la chaleur de réaction, les gaz d'activation rejetés qui sont recyclés.

2. Dispositif approprié pour la mise en oeuvre du procédé selon la revendication 1, caractérisé en ce qu'au moins un dispositif pour le recyclage des gaz d'activation rejetés est disposé dans un tuyau rotatif, au moins un conduit comportant au moins une soufflante étant disposé le long du tuyau rotatif, parallèlement à l'axe longitudinal du tuyau rotatif, le conduit étant disposé au moins en partie à l'intérieur du tuyau rotatif, tandis que la soufflante est disposée à l'extérieur du tuyau rotatif, sur l'enveloppe du tuyau rotatif.

Fig. 1

0 076 913

Fig. 2

0 076 913

0 076 913

Fig.3

Fig.4

3